(19) Europäisches Patentamt

European Patent Office

Office européen des brevets

(11) **EP 1 016 444 B1**

(12) **FASCICULE DE BREVET EUROPEEN**

(45) Date de publication et mention
de la délivrance du brevet:
**05.04.2006 Bulletin 2006/14**

(51) Int Cl.:
***B01D 45/12*** *(2006.01)*   ***C10G 11/18*** *(2006.01)*

(21) Numéro de dépôt: **99403121.9**

(22) Date de dépôt: **13.12.1999**

(54) **Procédé et dispositif pour la séparation rapide de particules solides et de fluides gazeux et leur utilisation**

Verfahren und Vorrichtung für die schnelle Abtrennung von festen Partikeln aus gasförmigen Fluiden und ihre Anwendung

Process and device for fast separating solid particles from gaseous fluids and its use

(84) Etats contractants désignés:
**AT BE CH CY DE DK ES FI FR GB GR IE IT LI LU MC NL PT SE**

(30) Priorité: **31.12.1998 FR 9816706**

(43) Date de publication de la demande:
**05.07.2000 Bulletin 2000/27**

(73) Titulaire: **TotalFinaElf France**
**92800 Puteaux (FR)**

(72) Inventeurs:
• **Mauleon, Jean-Louis**
**27500 Sainte Crois sur Aizier (FR)**

• **Mirgain, Cyrille**
**76600 le Havre (FR)**

(74) Mandataire: **Jolly, Jean-Pierre et al**
**Cabinet Jolly**
**54, rue de Clichy**
**75009 Paris (FR)**

(56) Documents cités:
**EP-A- 0 259 156      EP-A- 0 421 484**
**EP-A- 0 852 963      US-A- 4 419 965**

EP 1 016 444 B1

**EP 1 016 444 B1**

**Description**

La présente invention concerne la séparation de particules solides et de fluides gazeux. Elle a plus particulièrement pour objet un dispositif et un procédé permettant de séparer, de manière à la fois rapide et efficace, des particules solides en mélange intime avec des fluides gazeux.

L'invention s'applique notamment à des procédés de type thermique ou catalytique, dans lesquels des particules solides, à effet essentiellement caloporteur et/ou catalytique, se déplacent en suspension au sein de fluides gazeux, desquels elles doivent ensuite être rapidement séparées afin d'être régénérées avant réutilisation.

Dans ce qui suit, l'invention est décrite en référence à des procédés utilisés dans l'industrie pétrolière, et en particulier au procédé de craquage catalytique en lit fluidisé (communément dénommé procédé FCC, de l'anglais Fluid Catalytic Cracking), dans lequel les opérations de séparation gaz/particules doivent se faire de manière particulièrement rapide et efficace. Il doit toutefois être entendu que l'invention s'applique à tout procédé nécessitant une étape de séparation rapide de particules solides et de fluides gazeux.

Dans le procédé FCC, une charge d'hydrocarbures, pulvérisée sous forme de fines gouttelettes, est mise en contact avec des grains de catalyseur de craquage à haute température, qui circulent dans le réacteur sous forme de lit fluidisé dilué, c'est à dire en suspension au sein d'un fluide gazeux assurant ou assistant leur transport. Au contact du catalyseur chaud, il y a vaporisation de la charge, suivie du craquage des molécules d'hydrocarbures sur les sites actifs du catalyseur. Après que l'on ait ainsi atteint la gamme de poids moléculaire désirée, avec un abaissement correspondant des points d'ébullition, les effluents gazeux de la réaction sont séparés des grains de catalyseur. Ces grains de catalyseur, désactivés en raison du coke qui s'est déposé à leur surface, sont alors strippés, afin de récupérer les hydrocarbures entraînés, puis régénérés par combustion du coke, et enfin remis en contact avec la charge à craquer.

Les réacteurs utilisés sont généralement des réacteurs verticaux de type tubulaire, dans lesquels le lit fluidisé dilué de catalyseur se déplace suivant un flux essentiellement ascendant (le réacteur est alors dénommé " riser ") ou suivant un flux essentiellement descendant (le réacteur est alors dénommé " dropper " ou " downer ").

De manière connue en soi, l'efficacité des opérations de séparation des particules de catalyseur et des fluides gazeux dans lesquels elles sont mises en suspension constitue un facteur clef dans le procédé de craquage catalytique.

En particulier, en sortie du réacteur tubulaire, il importe de séparer de manière à la fois complète et rapide les particules de catalyseur des effluents réactionnels gazeux. En effet, il est fondamental de ne pas prolonger, dans l'enceinte de séparation et de strippage, le temps de contact entre les effluents réactionnels et le catalyseur, car cela entraîne inévitablement un surcraquage de ces effluents, qui se traduit par une cokéfaction accrue du catalyseur parallèlement à la formation de produits trop légers tels que des gaz secs (méthane, éthane, éthylène), au détriment des hydrocarbures intermédiaires recherchés (essence, gazole). Une séparation soit trop lente, soit incomplète (entraînement des effluents gazeux dans le strippeur), est ainsi sanctionnée par une perte importante en termes de rendement et de sélectivité du procédé.

Différents dispositifs sont aujourd'hui utilisés pour séparer des particules solides d'un fluide gazeux dans lequel elles sont dispersées. Ces dispositifs de séparation, qui peuvent être ou non directement connectés à la sortie du réacteur, sont essentiellement des séparateurs de type balistique, qui impriment un mouvement de rotation à la suspension, de telle sorte que les particules se séparent du gaz par effet centrifuge.

Parmi les divers dispositifs existants, les plus usités à l'heure actuelle sont ceux connus de l'homme du métier sous le nom de "cyclones". Ces dispositifs sont généralement constitués d'une enceinte essentiellement cylindrique, dans laquelle le flux de gaz et de particules est introduit tangentiellement, et mis en rotation autour d'un axe d'enroulement sensiblement vertical. Les particules ainsi concentrées aux parois du séparateur tombent dans la partie inférieure de celui-ci où elles sont évacuées, par un premier conduit qui les dirige généralement vers le bas, en direction d'une zone où elles sont collectées. Le fluide gazeux se concentre dans la partie supérieure du séparateur, d'où il est évacué par un second conduit, qui l'achemine vers un système de traitement approprié.

Ce dispositif présente l'avantage d'effectuer une séparation de très bonne qualité: les particules séparées contiennent une très faible quantité de fluides gazeux, et inversement. Toutefois, un tel système de séparation manque de rapidité. En effet, les particules effectuent plusieurs tours complets dans l'enceinte cylindrique, ce qui prolonge d'autant et de manière indésirable leur temps de contact avec les fluides gazeux.

Les divers perfectionnements qui ont été proposés dans l'art antérieur visent à améliorer encore la qualité même de la séparation par cyclone, mais ne résolvent pas, voire aggravent, le problème de la lenteur de cette opération.

Ainsi le brevet US 4 446 107 propose d'améliorer les performances des cyclones en munissant la sortie du conduit d'évacuation des particules séparées d'un clapet incliné qui s'ouvre régulièrement sous le poids des particules, lorsque ces dernières se sont accumulées en quantité suffisante. Ce clapet, lorsqu'il est en position fermée, réalise une contre-pression dans ledit conduit, de telle sorte que les fluides gazeux sont moins aspirés dans cette direction. Il en résulte une amélioration du degré de séparation.

Néanmoins, les ouvertures et fermetures répétées du clapet se traduisent par d'importantes variations de la contre-pression exercée dans le conduit d'évacuation des particules séparées. Ces instabilités perturbent l'opération de séparation et, in fine, nuisent fortement à la qualité de celle-ci.

Dans le but de remédier à l'instabilité du système ci-dessus, le brevet US 5 055 177 propose d'installer, autour de la sortie du conduit d'évacuation hors du cyclone des particules séparées, un récipient muni à sa base d'un drain de taille restreinte. Ce récipient est destiné à collecter les particules séparées qui s'entassent ainsi autour de la sortie dudit conduit et jouent ainsi le rôle d'un véritable joint d'obturation. Les particules s'échappent du récipient par le drain, et éventuellement par débordement (selon la taille du drain et le débit de particules séparées arrivant par le conduit). Le récipient peut éventuellement être muni d'un système d'injection de vapeur de manière à éviter la cokéfaction à l'intérieur de celui-ci.

Les particules ainsi entassées autour de la sortie dudit conduit effectuent le même type de contre-pression que la valve d'étanchéité décrite dans US 4 446 107 A, mais cette fois de manière constante, si bien que la qualité de la séparation s'en trouve améliorée (meilleur taux de séparation). Cependant, là encore, l'amélioration se fait au détriment de la rapidité de la séparation: le bouchon étanche réalisé par l'amas de catalyseur à la sortie du conduit, en réalisant une contre-pression importante, freine d'autant la vitesse à laquelle les particules se séparent vers la partie inférieure du cyclone, et un tel système ne fait donc que prolonger encore un temps de séparation déjà trop long.

Afin de pallier le manque de rapidité des systèmes de séparation de type cyclonique, d'autres techniques de séparation balistique ont été proposées, en particulier des séparateurs à axe d'enroulement horizontal, directement connectés à la sortie du réacteur, comme ceux proposés par exemple dans EP 332 277 A ou dans FR 2 758 277 A.

Le séparateur décrit dans EP 332 277 A imprime un demi tour, autour d'un axe horizontal, à un flux ascendant de gaz et de particules. Les particules projetées aux parois sont évacuées vers le bas tandis que le fluide gazeux est soutiré au moyen d'un conduit disposé dans l'axe de rotation. Ce dispositif présente l'avantage indéniable d'effectuer une séparation extrêmement rapide du mélange de gaz et de particules. Toutefois, une part souvent très importante du fluide gazeux est entraînée avec les particules solides, dans le conduit d'évacuation de celles-ci, d'où un degré de séparation généralement insuffisant.

Aucun des dispositifs mentionnés ci-dessus ne permet donc de concilier qualité et rapidité dans les opérations de séparation de gaz et de particules solides. Ces deux paramètres semblent même contradictoires, puisque dans l'art antérieur l'amélioration de l'un se fait au détriment de l'autre.

Pour pallier les insuffisances des dispositifs de l'art antérieur, une solution traditionnellement employée dans le domaine du FCC, consiste à employer un séparateur de type "rapide" (par exemple à enroulement horizontal), et faire en sorte que le conduit d'évacuation des particules séparées plonge directement dans le lit fluidisé dense de strippage des particules situé au dessous. Ceci a pour effet, en induisant une contre-pression dans ledit conduit d'évacuation, de diminuer la quantité des fluides gazeux entraînés dans ce conduit, d'où une séparation plus efficace.

Cette solution, simple et peu coûteuse en théorie, pose toutefois de nombreux problèmes lors de sa mise en pratique. En particulier, il faut éviter d'immerger trop profondément le conduit d'évacuation des particules séparées dans ledit lit de strippage, car cela perturbe les opérations de traitement des particules qui y sont pratiquées. En conséquence, si l'on veut maintenir immergée l'extrémité du conduit, il faut maintenir sensiblement constant le niveau du lit de strippage, ce qui s'avère extrêmement contraignant dans la conduite du procédé, où il est au contraire nécessaire de pouvoir admettre des variations du niveau de ce lit. C'est pourquoi, en pratique, cette solution s'avère peu judicieuse dans la mesure où elle nuit fortement à la flexibilité opératoire et aux performances du procédé.

Poursuivant ses recherches en matière de séparation des flux de gaz et de particules, la Demanderesse a mis au point un dispositif et un procédé qui permettent de remédier, de manière simple et efficace, aux insuffisances de l'art antérieur. En particulier, l'invention propose une solution originale, qui permet de concilier qualité et rapidité dans les opérations de séparation des mélanges de fluides gazeux et de particules solides.

A cet effet, la présente invention a pour objet un dispositif de séparation de particules solides et de fluides gazeux comportant un moyen de soutirage rapide, de type connu en soi, pour l'évacuation d'au moins une fraction des fluides gazeux, et au moins un conduit permettant de diriger de haut en bas le flux résultant enrichi en particules, vers une zone de strippage en lit fluidisé également de type connu en soi.

Ce dispositif se caractérise en ce qu'est intercalé, entre ledit moyen de soutirage rapide et ladite zone de strippage, un réceptacle ouvert dans sa partie supérieure, dans lequel débouche ledit conduit, et en ce que ce réceptacle comprend à sa base au moins un diffuseur alimenté en gaz de fluidisation et grâce auquel les particules solides sont mises en régime de lit fluidisé dense d'une densité comprise entre 300 et 800 kg.m$^{-3}$, puis s'écoulent par débordement dudit réceptacle vers ladite zone de strippage située au dessous.

Dans la présente invention, on entend par moyen de soutirage rapide tout moyen connu en soi permettant d'éliminer du mélange de fluides gazeux et de particules solides au moins une fraction desdits fluides, en un intervalle de temps aussi court que possible, avantageusement inférieur à une seconde, de préférence inférieur à 0,5 seconde et, encore plus préférentiellement, inférieur à 0,2 seconde. Le but de ce moyen n'est pas d'effectuer une séparation parfaite des fluides gazeux et des particules, comme celles réalisées avec les séparateurs de type cyclonique. Il s'agit au contraire d'une séparation plus grossière, dont le but est de retirer, le plus rapidement possible, l'essentiel des particules des fluides gazeux, afin d'éviter que ces derniers ne restent en contact prolongé avec des particules.

Divers moyens peuvent être employés à cet effet. De manière avantageuse, le moyen de soutirage est constitué d'un système de séparation balistique à axe d'enroulement horizontal, qui imprime au mélange à séparer une rotation d'un angle compris entre 30 et 190 degrés autour de l'axe, tout en soutirant latéralement au moins une fraction des fluides gazeux. A cet effet, les séparateurs tels que décrits dans la demande de brevet FR 2 758 277 constituent d'excellents exemples d'un tel moyen de soutirage.

Ainsi, le dispositif selon l'invention réalise une première séparation extrêmement rapide (soutirage rapide d'une fraction des fluides gazeux), donc relativement grossière, puis achemine vers le bas le flux résultant enrichi en particules, mais contenant encore des fluides gazeux, et plonge ce flux directement à l'intérieur dudit réceptacle, au sein d'un lit fluidisé d'une densité comprise entre 300 et 800 kg.m$^{-3}$.

Pour une telle plage de densités, il s'est avéré que la quantité de fluides gazeux entraînés dans le flux résultant de la première séparation est notablement diminuée : une contre-pression régulière et surtout optimale est exercée au niveau de la sortie du conduit d'acheminement vers le bas du flux résultant, si bien qu'une quantité maximale de fluides gazeux est évacuée, en amont, dans le moyen de soutirage rapide, sans que cela induise pour autant une perte en terme de rapidité de l'opération de soutirage. En contrebalançant ainsi le phénomène d'entraînement des fluides gazeux, on améliore sensiblement la qualité des séparations rapides, sans dégradation aucune de leur rapidité.

Le dispositif selon l'invention permet ainsi de répondre aux objectifs précités, à savoir concilier rapidité et qualité des opérations de séparation de fluides gazeux et de particules solides, sans les inconvénients inhérents aux techniques de l'art antérieur.

En particulier, le conduit d'acheminement vers le bas du flux résultant enrichi en particules ne plonge pas dans le lit de strippage des particules séparées. Il débouche au contraire dans un lit fluidisé intermédiaire de densité choisie et qui est complètement indépendant dudit lit de strippage, puisque intégralement contenu dans un réceptacle situé au dessus.

On améliore ainsi l'efficacité de la séparation, sans que cela diminue aucunement la flexibilité opératoire du procédé: le niveau du lit de strippage n'a plus aucune incidence sur l'efficacité de la séparation, et il peut varier autant que le nécessite la bonne conduite du procédé.

Par ailleurs, le fait que le conduit d'acheminement vers le bas du flux enrichi en particules ne débouche pas directement dans le lit de strippage permet d'éviter de perturber les opérations de traitement des particules qui y sont pratiquées. En effet, l'introduction, directement à l'intérieur du lit de strippage, de particules non traitées et accompagnées d'une quantité variable de fluides gazeux, a pour effet direct de mélanger du fluide gazeux et des particules non traitées avec des particules partiellement traitées, qui sont ainsi à nouveau contaminées. Grâce au dispositif selon l'invention, les particules s'échappent dudit réceptacle par débordement et tombent ainsi à la surface du lit de strippage situé au dessous, dans lequel elles peuvent alors être traitées progressivement au fur et à mesure de leur progression dans ce lit, à contre-courant d'un fluide de traitement.

De plus, le dispositif selon l'invention permet non seulement d'agir sur la qualité de la séparation en diminuant le taux de fluides gazeux entraînés avec le flux enrichi en particules, mais il permet également de parachever cette séparation. En effet, la quantité restante de fluides gazeux entraînés avec les particules aboutit dans le lit fluidisé dense contenu dans le réceptacle, où elle est séparée des particules, car entraînée vers le haut par le gaz de fluidisation qui s'échappe dudit lit fluidisé dense, tandis que les particules débordent du réceptacle et s'écoulent vers le bas. Le dispositif selon l'invention réalise ainsi une véritable séparation secondaire, en aval du moyen de soutirage.

Enfin, pour les unités comportant déjà un système de séparation apte à soutirer de manière rapide une fraction des fluides gazeux, le dispositif selon l'invention s'avère particulièrement simple à mettre en oeuvre, puisqu'il suffit d'intercaler, en aval dudit système, au pied du (ou des) conduit(s) d'acheminement du flux enrichi en particules, un ou plusieurs réceptacles muni(s) d'un diffuseur et d'un moyen d'alimentation en gaz de fluidisation. Facile à mettre en oeuvre et relativement peu coûteux, le dispositif selon l'invention s'avère donc extrêmement avantageux dans le cadre de la modernisation d'unités existantes.

L'invention englobe également le procédé de séparation associé au dispositif décrit ci-dessus et elle a, par conséquent, pour objet un procédé de séparation de particules solides et de fluides gazeux, dans lequel on effectue une étape de soutirage rapide d'une durée inférieure à une seconde, qui permet d'évacuer au moins une fraction des fluides gazeux, puis l'on dirige vers le bas, à l'aide d'au moins un conduit, le flux résultant enrichi en particules, vers une zone de strippage en lit fluidisé de type connu en soi, ce procédé étant caractérisé en ce que l'on introduit le flux résultant directement a l'intérieur d'un lit fluidisé dense de particules de densité comprise entre 300 et 800 kg.m$^{-3}$, disposé au dessus de la zone de strippage, et entièrement contenu dans au moins un réceptacle hors duquel les particules s'écoulent par débordement vers la zone de strippage située au dessous.

Un premier avantage du procédé selon l'invention est qu'il confère à l'utilisateur un contrôle sur les paramètres de la séparation. En effet, puisque le lit fluidisé dense contenu dans le réceptacle est totalement indépendant du reste de l'unité, il est possible de faire varier sa densité, par exemple en ajustant le débit D1 du gaz de fluidisation introduit dans le réceptacle, ce qui a pour effet de faire varier la contre-pression exercée en sortie du conduit d'acheminement vers le bas dudit flux résultant enrichi en particules.

En particulier, il est avantageux de réguler le débit D1 du gaz de fluidisation introduit dans le réceptacle en fonction de la quantité des fluides gazeux qui sont entraînés, à l'issue du soutirage, dans le flux résultant enrichi en particules. Notamment, l'on peut ajuster ledit débit D1 de manière à maintenir, en sortie du conduit d'acheminement vers le bas du flux résultant enrichi en particules, une contre-pression suffisamment élevée pour que la quantité de fluides gazeux entraînée avec le flux résultant enrichi en particules soit inférieure ou égale à 15 %, de préférence inférieure ou égale à 5 %, de la quantité initiale de fluides gazeux à séparer des particules solides.

L'on peut ainsi ajuster le degré de séparation au niveau requis et le faire varier si nécessaire, flexibilité opératoire que ne permet aucun des systèmes décrits dans l'art antérieur.

Selon l'invention, le lit de particules contenu dans le réceptacle est avantageusement maintenu à l'état fluidisé par introduction, dans sa partie inférieure, d'au moins un gaz de fluidisation, avec un débit D1 tel que la densité de ce lit soit comprise entre 300 et 800 kg. $m^{-3}$ et, de préférence, entre 600 et 700 kg.$m^{-3}$.

Par ailleurs, il est particulièrement avantageux d'ajuster le débit D1 du gaz de fluidisation de manière à maintenir la vitesse superficielle de ce gaz dans le lit fluidisé dense de particules contenu dans le réceptacle à une valeur comprise entre 0,1 et 40 cm.$s^{-1}$ inclus et, de préférence, comprise entre 0,1 et 20 cm.$s^{-1}$ inclus.

Le gaz de fluidisation peut être tout gaz ou mélange gazeux compatible avec le procédé. En particulier, et cela constitue un avantage indéniable du procédé selon l'invention, le gaz de fluidisation peut être choisi de manière à réaliser un prétraitement des particules en amont du traitement qui sera pratiqué dans la zone de strippage située au dessous.

En particulier, le gaz de fluidisation introduit contient avantageusement de la vapeur d'eau, seule ou en mélange avec d'autres gaz, ce qui permet de réaliser un véritable préstrippage, en favorisant la désorption de la partie la plus volatile des fluides gazeux adsorbés sur les particules solides ou entraînés dans les pores de celles-ci. Les particules, lorsqu'elles arrivent ensuite dans la zone de strippage, sont donc moins "contaminées", et la qualité de l'opération de strippage en lit fluidisé s'en trouve sensiblement améliorée.

De plus, le gaz de fluidisation peut comprendre, en faible quantité, des constituants ayant pour fonction d'effectuer un prétraitement des particules solides tel qu'un conditionnement, une passivation, ce qui permet de faciliter et d'améliorer les traitements ultérieurs auxquels les particules solides seront soumises, non seulement le strippage mais également la régénération de ces particules.

Dans le dispositif selon l'invention, le réceptacle est positionné de manière à ce que le conduit d'acheminement vers le bas du flux résultant enrichi en particules débouche directement à l'intérieur de ce réceptacle, dans le lit fluidisé dense de particules qu'il contient, avec une hauteur de débordement H avantageusement comprise entre 50 cm et 2 m inclus, de préférence entre 50 cm et 1 m inclus. Le terme hauteur de débordement désigne la longueur de conduit qui est immergée dans le lit fluidisé dense de particules et correspond à la différence de hauteur entre l'extrémité inférieure du conduit d'acheminement et l'extrémité supérieure des parois latérales du réceptacle.

De plus, la surface latérale, à la sortie du conduit d'acheminement vers le bas du flux résultant enrichi en particules, est préférentiellement comprise entre 0,7 et 1,5 fois la section de ce conduit. Le terme surface latérale désigne la surface du tube cylindrique creux fictif, de section égale à la section du conduit d'acheminement, et de hauteur h égale à L - H, avec L désignant la hauteur du lit fluidisé dense contenu dans le réceptacle et H la hauteur de débordement. En d'autres termes, il s'agit de la surface du tube cylindrique creux fictif qui prolongerait le conduit d'acheminement jusqu'à la base du lit fluidisé dense.

Le réceptacle comporte à sa base au moins un diffuseur permettant d'alimenter le lit de particules en gaz de fluidisation. Ce diffuseur est lui-même alimenté en gaz de fluidisation par une ligne, avantageusement munie d'un moyen de régulation du débit D1 de ce gaz. Ceci permet d'ajuster le débit D1 de manière précise, notamment de manière à optimiser la densité du lit fluidisé de particules contenu dans le réceptacle.

Avantageusement, le débit D1 du gaz de fluidisation est ajusté de manière à maintenir la vitesse superficielle de ce gaz dans le lit fluidisé dense de particules contenu dans le réceptacle à une valeur comprise entre 0,1 et 40 cm.$s^{-1}$ inclus et, de préférence, entre 0,1 et 20 cm.$s^{-1}$ inclus.

Le diffuseur peut être constitué de tout moyen permettant de libérer, de manière homogène et finement divisée, le gaz de fluidisation à la base du lit de particules que contient le réceptacle. Il peut par exemple être constitué d'un agencement de un ou plusieurs tubes, éventuellement disposés en faisceau, régulièrement pourvus de fentes ou d'orifices afin de permettre une meilleure distribution du gaz de fluidisation. De manière particulièrement avantageuse, le diffuseur est constitué d'un tube annulaire, disposé à plat dans la partie inférieure du réceptacle, et pourvu de fentes ou d'orifices, dans sa moitié supérieure.

Selon un mode de réalisation préféré, le diffuseur est constitué d'une chambre occupant la partie inférieure du réceptacle, et dont la paroi supérieure, sur laquelle repose le lit fluidisé dense de particules, est régulièrement percée d'orifices de petite taille, par lesquels le gaz de fluidisation est distribué sur toute la surface inférieure du lit fluidisé.

Le réceptacle est avantageusement délimité par une ou plusieurs paroi(s) inférieure(s) constituant son fond, lequel est entouré d'une ou plusieurs parois latérales sensiblement verticales, formant ainsi une "enceinte" dépourvue de couvercle. Sa section transversale peut être de forme quelconque et est avantageusement circulaire, carrée ou rectangulaire.

**EP 1 016 444 B1**

Les dimensions de ce réceptacle dépendent de l'espace dont on dispose entre le moyen de soutirage rapide et la zone de strippage située au dessous. Elles sont de préférence telles que le lit fluidisé dense contenu dans ce réceptacle soit de taille très inférieure à celle du lit fluidisé de strippage. La section du réceptacle est impérativement supérieure à celle du conduit d'acheminement vers le bas du flux enrichi en particules, puisque ce conduit débouche directement dans ce réceptacle. La section du réceptacle est avantageusement comprise entre 1,5 et 6 fois celle du (ou des) conduit(s) qui y plonge (nt) .

Par ailleurs, le réceptacle est constitué d'un matériau choisi pour résister aux conditions opératoires du procédé considéré. Dans le cas du craquage catalytique, le matériau en question doit résister, d'une part, à des températures très élevées et, d'autre part, à l'attrition due à la circulation très rapide des particules de catalyseur. Il peut alors être constitué par exemple d'acier réfractaire et/ou de céramique.

Selon un mode de réalisation préférentiel, le réceptacle est muni à sa base d'un ou plusieurs orifice(s) ou drains, de section totale comprise entre 3% et 20% de la section du réceptacle. Un tel système permet d'évacuer par la base du réceptacle d'éventuels agglomérats de particules, ainsi que des débris divers tels que des débris de métaux ou autre matériaux constitutifs de l'unité, et qui ont été arrachés et entraînés par les particules circulant généralement à vitesse élevée. Une fraction des particules s'écoule alors également par cet orifice, mais la section réduite de celui-ci par rapport à celle du réceptacle est telle que la majeure partie des particules sortent par le haut du réceptacle, par débordement hors de celui-ci.

De manière avantageuse, le bord supérieur de la (des) paroi(s) latérale(s) du réceptacle est (sont) découpée (s) en dents de scie. Un tel découpage permet, au moment où les particules débordent, de favoriser la séparation et l'entraînement vers le haut de la fraction restant des fluides gazeux qui n'ont pas été évacués par le moyen de soutirage et ont été entraînés dans le réceptacle, avec ledit flux résultant enrichi en particules. Ce découpage favorise également l'écoulement par débordement des particules solides hors du réceptacle, ainsi qu'une distribution homogène, en pluie, de ces particules à la surface du lit fluidisé de strippage situé en dessous, sans perturber les opération de traitement qui sont pratiquées dans ce dernier.

Dans le dispositif selon l'invention, le réceptacle est positionné au dessus de la zone de strippage, au pied du (des) conduit(s) qui évacue(nt) ledit flux résultant enrichi en particules hors du moyen de soutirage rapide, et les achemine vers le bas. Le réceptacle peut être maintenu dans cette position par divers moyens, tels que, par exemple, un ou plusieurs bras reliés à des parois internes ou à d'autres éléments fixes à l'intérieur de l'unité. Il peut ainsi avantageusement être supporté par trois bras espacés de 120°C et fixés aux parois internes de l'enceinte ou s'effectue la séparation.

Parmi les moyens de soutirage rapide susceptibles d'être employés dans l'invention, certains divisent le mélange de fluides gazeux et de particules solides à séparer, ce qui permet un meilleur soutirage desdits fluides. C'est le cas par exemple des systèmes tels que décrits dans EP 332 277 A, dans lequel un soutirage latéral des fluides gazeux est effectué simultanément dans une pluralité de chambres de séparation parallèles. Dans ce cas, le flux résultant enrichi en particules est en fait constitué d'au moins deux flux, acheminés séparément vers le bas par au moins deux conduits sensiblement parallèles, généralement verticaux.

Il va de soi que l'invention englobe également cette forme de mise en oeuvre et diverses variantes sont alors possibles.

Selon une première variante, les conduits débouchent chacun à l'intérieur d'un réceptacle indépendant contenant un lit fluidisé de particules de densité appropriée.

Selon une deuxième variante, au moins deux conduits débouchent dans un réceptacle commun, contenant un seul et même lit fluidisé dense de particules. Cette solution présente l'avantage d'éviter de multiplier le nombre de lits fluidisés, et de réduire ainsi les équipements nécessaires (réceptacles, diffuseurs de gaz de fluidisation,...)

Dans le procédé selon l'invention, la température du lit fluidisé dense contenu dans le réceptacle peut être égale à ou au contraire différente de celle du lit de strippage situé au dessous. Selon un mode de réalisation préféré, la température dudit lit fluidisé dense est supérieure à celle du lit de strippage, ce qui permet de favoriser la séparation de la quantité restante de fluides gazeux entraînés avec les particules dans le réceptacle. En effet, l'entraînement de ces fluides gazeux restants par le gaz de fluidisation introduit dans le réceptacle est meilleur à température plus élevée. La température de ce lit fluidisé dense peut être contrôlée de diverses manières, en particulier en régulant de manière appropriée la température du gaz de fluidisation introduit dans le réceptacle.

L'invention peut être utilisée dans tout procédé industriel nécessitant une étape de séparation rapide et efficace de fluides gazeux et de particules solides, dont, en particulier, mais non limitativement, des procédés du type des craquages thermiques ou des craquages catalytiques en lit fluidisé.

Dans le cas du craquage catalytique en lit fluidisé, l'invention peut, de manière particulièrement avantageuse, être mise en oeuvre au niveau de l'étape de séparation effectuée, en sortie du réacteur, entre les effluents réactionnels (hydrocarbures à l'état gazeux) et les particules de catalyseur désactivées, que le réacteur soit de type "riser" ou "downer".

Diverses formes de mise en oeuvre de l'invention vont être décrites ci-après plus en détail, en référence aux dessins annexés. Ceux-ci visent seulement à illustrer l'invention et n'ont donc aucun caractère limitatif, le dispositif et le procédé objets de la présente invention pouvant être mis en oeuvre suivant de très nombreuses variantes.

Sur ces dessins :

La figure 1 représente une unité de craquage catalytique équipée d'un réacteur à flux essentiellement ascendant, à la sortie duquel est intégré un dispositif de séparation conforme à l'invention.

Les figures 2 et 3 sont des vues plus détaillées de variantes du réceptacle équipé de différents types de diffuseurs de gaz de fluidisation.

La figure 4 est une vue schématique illustrant l'utilisation du dispositif conforme à l'invention, dans le cas d'une unité de craquage catalytique équipée d'un réacteur à flux essentiellement descendant.

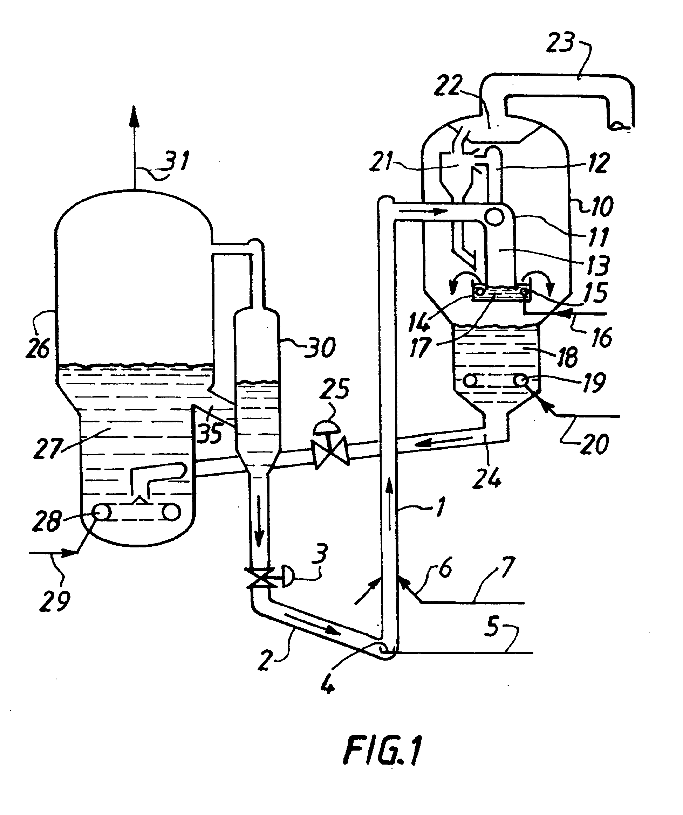

On se référera d'abord à la figure 1, qui illustre une forme de mise en oeuvre du dispositif de séparation rapide conforme à l'invention, destinée à effectuer la séparation des particules de catalyseur et des effluents réactionnels en sortie d'un réacteur d'une unité de craquage catalytique, ce réacteur étant à flux essentiellement ascendant.

Cette unité est d'un type connu en soi. Elle comprend notamment un réacteur en forme de colonne 1, dit élévateur de charge, ou "riser", alimenté à sa base par une ligne 2 en particules de catalyseur régénéré, avec un débit contrôlé au moyen d'une vanne de régulation 3. Un gaz élévateur, par exemple de la vapeur d'eau, est introduit dans la colonne 1 par une ligne 5, au moyen d'un diffuseur 4, tandis que la charge à craquer est acheminée au moyen d'une ligne 7 et injectée dans le réacteur 1 au moyen d'injecteurs 6.

Au sommet de la colonne 1, la charge craquée et les particules de catalyseur désactivées sont dirigées vers une enceinte 10, dans laquelle s'effectue la séparation des effluents réactionnels et des particules, ainsi que le strippage de ces dernières.

Dans l'enceinte 10, une étape de soutirage rapide est réalisée en moins de 0,2 seconde au moyen d'un séparateur balistique 11, qui imprime au flux de gaz et de particules une rotation d'un angle de 90 degrés autour d'un axe horizontal, ce qui a pour effet de projeter les particules à la périphérie, tandis qu'une partie des effluents gazeux est soutirée latéralement, par un conduit 12 partant de l'axe du séparateur 11. Le flux résultant, enrichi en particules, est dirigé vers le bas par un conduit 13 sensiblement vertical.

Conformément à l'invention, le conduit 13 débouche directement à l'intérieur d'un réceptacle 14, dans lequel les particules sont maintenues à l'état de lit fluidisé dense 17 par introduction d'un gaz de fluidisation, au moyen d'un diffuseur 15 alimenté par une ligne 16. Ce gaz de fluidisation est introduit avec un débit régulé, de manière à maintenir la densité du lit fluidisé 17 à une valeur comprise entre 300 et 800 kg. $m^{-3}$, compte tenu de la taille du réceptacle 14 et du débit de particules arrivant par le conduit 13.

Le réceptacle 14 est ouvert dans sa partie supérieure, de telle sorte que les particules de catalyseur débordent et s'écoulent dans un lit fluidisé de strippage 18 situé au-dessous, dans lequel elles sont strippées à contre-courant d'un fluide de strippage, généralement de la vapeur d'eau, acheminé par une ligne 20 et introduit par des injecteurs ou diffuseurs 19 de gaz de fluidisation disposés régulièrement à la base de l'enceinte 10.

Les effluents gazeux soutirés au niveau du séparateur rapide 11 contiennent généralement encore, en quantité moindre, des particules de catalyseur, qui ont été aspirées dans le conduit 12. Il est alors nécessaire de prévoir un ou plusieurs moyens de séparation secondaires, qui permettent de réaliser une séparation plus poussée que celle effectuée au niveau du séparateur rapide 11. Ces moyens de séparation secondaire sont avantageusement constitués de cyclones, qui permettent d'éliminer de l'effluent réactionnel l'intégralité des particules restantes. Ici, le conduit 12 de soutirage des effluents gazeux débouche à l'entrée d'un cyclone 21 logé dans l'enceinte 10, au sommet 22 de laquelle les effluents de la réaction sont collectés, et acheminés par une ligne d'évacuation 23 vers une zone de fractionnement non représentée.

Les particules désactivées de catalyseur strippé sont évacuées à la base de l'enceinte 10 vers un régénérateur 26, par l'intermédiaire d'un conduit 24, sur lequel est prévue une vanne de régulation 25. Dans le régénérateur 26, le coke déposé sur les particules du catalyseur est brûlé à l'aide d'air ou d'un autre gaz riche en oxygène, injecté à la base du régénérateur par une ligne 29, qui alimente des injecteurs ou diffuseurs 28 régulièrement espacés. Les particules du catalyseur entraînées par le gaz de combustion sont séparées, par exemple par des cyclones non représentés, et le gaz de combustion est évacué par une ligne 31, tandis que les particules de catalyseur s'écoulent par une ligne 35 dans l'enceinte 30, d'où elles sont recyclées à l'alimentation de l'élévateur 1 par le conduit 2.

Les caractéristiques dimensionnelles et opératoires d'une unité du type de celle représentée sur la figure 1 sont habituellement les suivantes :

- hauteur du réacteur-élévateur 1: 5 à 40 mètres,
- débit total d'alimentation de l'élévateur 1 en charge(s) à traiter: 2000 à 15000 tonnes par jour,
- débit d'alimentation du réacteur 1 en catalyseur : 3 à 50 tonnes par minute,
- température(s) de préchauffage des charges à craquer : 70 à 450°C,
- température de craquage dans le réacteur 1, en aval de la zone d'injection: 500 à 600°C,
- pression opératoire dans le réacteur 1: $0,5.10^5$ à $5.10^5$ Pascals relatifs,

- temps de séjour de la charge dans l'élévateur 1: 0,1 à 10 secondes,
- température de régénération du catalyseur: 600 à 950°C,
- temps de séjour du catalyseur dans le régénérateur 26: 2 à 10 minutes.

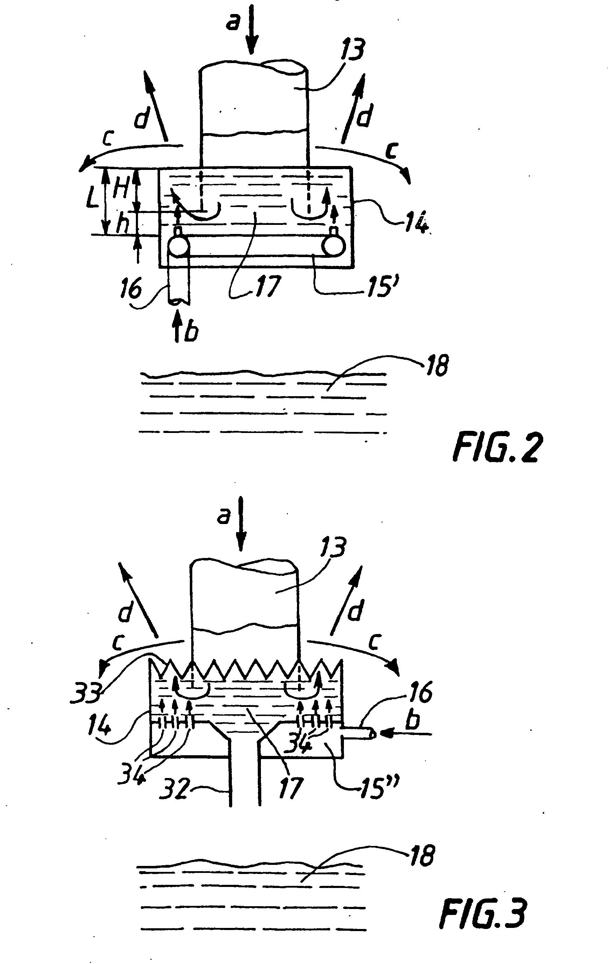

La figure 2 est une vue plus détaillée du réceptacle 14 de la figure 1, dans laquelle des flèches indiquent le sens de circulation des particules et des différents fluides présents.

Le flux enrichi en particules provenant de ladite étape de soutirage rapide est dirigé vers le bas (flèche a) à l'intérieur du conduit 13 qui l'introduit directement dans la moitié supérieure du lit fluidisé dense 17 de hauteur L, contenu dans le réceptacle 14.

De préférence, le réceptacle 14 est positionné de telle sorte que la hauteur de débordement H soit comprise entre 50 cm et 2m, par exemple égale à 80 cm. D'autre part, la surface latérale à la sortie du conduit 13 est avantageusement comprise entre 0,7 et 1,5 fois la section de sortie du conduit 13 ; elle est de préférence égale à la section de sortie de ce conduit 13. Cette surface latérale représente la surface du tube cylindrique creux fictif de section égale à la section du conduit 13, et de hauteur h égale à L - H.

Le lit de particules 17 est alimenté en gaz de fluidisation, acheminé par la ligne 16 (flèche b) au diffuseur 15'. Ce diffuseur est constitué d'un tube annulaire pourvu d'un nombre suffisant d'orifices pour permettre une introduction homogène et finement divisée du gaz au sein du lit de particules 17.

Le lit fluidisé de particules 17 déborde (flèche c) hors du réceptacle 14, pour s'écouler vers le lit fluidisé de strippage 18 situé au-dessous. Parallèlement, le gaz de fluidisation s'échappe du lit fluidisé dense 17 et s'élève au dessus du réceptacle 14 (flèche d), entraînant avec lui une partie des effluents réactionnels qui n'ont pas été évacués au niveau de ladite étape de soutirage rapide et ont été entraînés dans le conduit 13 avec le flux enrichi en particules.

Selon un mode de réalisation préféré, le gaz de fluidisation introduit dans le lit 17 contient de la vapeur d'eau, seule ou en mélange avec d'autres gaz, afin de favoriser la désorption de la partie la plus volatile des hydrocarbures adsorbés sur les particules catalyseur désactivé ou entraînés dans les pores de celui-ci.

La figure 3 représente une variante préférée du réceptacle présenté à la figure 2. En plus des éléments décrits en référence à la figure 2, le réceptacle de la figure 3 comporte un drain 32 de taille réduite, qui permet d'évacuer à la base du réceptacle 14 d'éventuels agglomérats de catalyseur ou autres débris de matériau réfractaire, amenés dans le réceptacle par le conduit 13, et qui risqueraient de perturber l'établissement du lit fluidisé dense 17, voire, en s'accumulant, de boucher le réceptacle 14.

Le diffuseur 15" de gaz de fluidisation est constitué d'une chambre occupant la partie inférieure du réceptacle 14. La paroi supérieure de la chambre 15" est régulièrement percée d'orifices 34, ce qui permet une bonne répartition du gaz de fluidisation à la base du lit fluidisé dense 17. Enfin, le bord supérieur 33 des parois du réceptacle 14 est découpé en dents de scie.

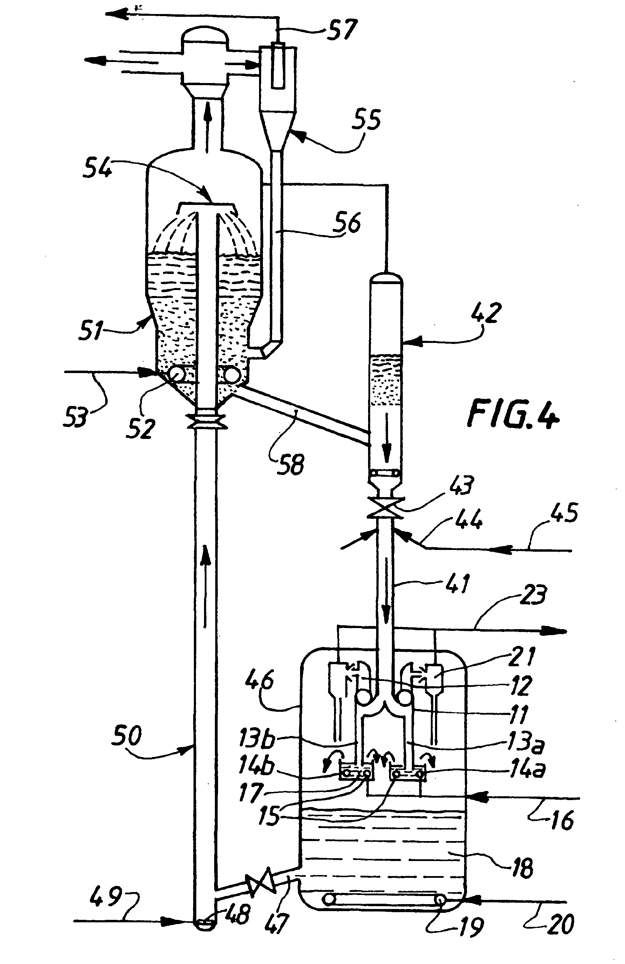

La figure 4 représente un exemple de réalisation du dispositif de séparation rapide conforme à l'invention, pour effectuer la séparation des particules de catalyseur et des effluents réactionnels gazeux en sortie du réacteur d'une unité de craquage catalytique équipée d'un réacteur à flux essentiellement descendant.

Le dispositif représenté comprend un réacteur tubulaire 41 à flux descendant, ou "downer", alimenté à sa partie supérieure, à partir d'une enceinte 42, qui lui est concentrique, en particules de catalyseur régénéré, avec un débit régulé au moyen d'une vanne 43. La charge à craquer est injectée dans le réacteur 41 au moyen d'injecteurs-pulvérisateurs 44 alimentés par une ligne 45. Les particules de catalyseur et les hydrocarbures s'écoulent alors de haut en bas dans le réacteur 41, dans lequel se produisent les réactions de craquage.

Les effluents réactionnels et les particules de catalyseur cokées pénètrent alors dans une enceinte de séparation et de strippage 46, située à la base du réacteur 41. Le mélange pénètre dans le séparateur rapide 11, où il subit une déflexion autour d'un axe de rotation horizontal, avec soutirage simultané d'au moins une fraction des effluents gazeux au moyen des conduits 12 qui débouchent latéralement dans le séparateur 11, dans l'axe de rotation de celui-ci. Pour un meilleur soutirage des effluents gazeux, le mélange est ici séparé en deux flux, chacun subissant la déflexion avec soutirage des gaz, dans deux chambres parallèles. Le flux résultant, enrichi en particules de catalyseur, est alors acheminé vers le bas, vers la zone de strippage en lit fluidisé 18, au moyen des deux conduits parallèles 13a et 13b.

Conformément à l'invention, chacun des conduits 13a et 13b débouche à l'intérieur d'un réceptacle 14a, 14b ouvert dans sa partie supérieure. Chaque réceptacle 14a, 14b est alimenté à sa base en gaz de fluidisation, au moyen des diffuseurs 15, alimentés par la ligne 16, qui peut être commune ou distincte pour chacun des deux réceptacles. Chaque réceptacle 14a, 14b comporte un lit fluidisé de particules 17, de densité comprise entre 300 et 800 kg.m$^{-3}$, à partir duquel les particules solides s'écoulent par débordement dans le lit fluidisé de strippage 18 situé au dessous, dans lequel elles sont strippées à contre-courant d'un fluide de strippage acheminé par la ligne 20 au diffuseur 19.

Dans la réalisation illustrée par la figure 4, chacun des conduits 13a, 13b, débouche dans son propre réceptacle 14a, 14b, mais, selon une variante de l'invention, il est tout-à-fait possible de faire déboucher les deux conduits 13a, 13b, dans un seul et unique réceptacle 12, comportant un unique lit fluidisé dense de particules.

Les effluents gazeux soutirés en 12 sont acheminés aux cyclones 21, dans lesquels une séparation plus poussée est effectuée afin d'éliminer la faible quantité de particules entraînées. Celles-ci sont alors retournées en direction de la zone de strippage en lit fluidisé 18, tandis que les effluents exempts de particules sont évacués par la ligne 23, qui les dirige vers une zone de fractionnement non représentée.

Les particules de catalyseur strippé sont évacuées par gravité hors de l'enceinte 46, par un conduit incliné 47, vers une colonne ascendante 50, dans laquelle ils sont acheminés vers le haut, vers un régénérateur 51, à l'aide d'un gaz vecteur diffusé en 48 à la base de la colonne 50, à partir de la ligne 49.

La colonne 50 débouche dans un régénérateur 51, au-dessous d'un séparateur balistique 54, qui assure la séparation des particules de catalyseur et du gaz vecteur. Les particules de catalyseur sont alors régénérées par combustion du coke qui s'est déposé à leur surface, à l'aide d'un courant d'air ou d'oxygène amené par une ligne 53 au diffuseur 52.

A la partie supérieure du régénérateur 51, les gaz provenant de la combustion sont évacués vers des cyclones 55. Les particules de catalyseur entraînées sont recyclées par un conduit 56 vers le régénérateur, et les gaz sont évacués par une ligne 57. Quant aux particules de catalyseur régénéré, elles sont évacuées, à la base du régénérateur 51, par gravité le long d'un conduit 58, en direction de l'enceinte 42.

L'exemple qui suit vise à illustrer l'invention et n'a par conséquent aucun caractère limitatif.

**Exemple**

Trois essais de craquage catalytique ont été effectués à partir d'une charge pétrolière lourde, constituée de 50 % de distillat sous vide et de 50 % de résidu atmosphérique. Cette charge possède les propriétés suivantes :

- densité à 15°C : 0,925,
- viscosité à 100°C : $15,2.10^{-6}$ m$^2$/s (15,2 centistokes),
- point de distillation 50 % en poids : 484°C,
- résidu de carbone Conradson : 2,5 % en poids,
- teneur en soufre : 0,80 % en poids,
- teneur en azote basique : 682 ppm,
- teneur en nickel : 1,8 ppm,
- teneur en vanadium : 2,3 ppm,
- teneur en hydrogène moléculaire : 12,3 % en poids.

Les essais ont été réalisés dans une unité industrielle de craquage catalytique telle que celle représentée sur la figure 1, qui comporte un réacteur 1 de type "riser", à la sortie duquel un séparateur balistique 11 rapide imprime au mélange à séparer (effluents gazeux et particules de catalyseur) une rotation d'un angle de 90 degrés autour d'un axe horizontal, tout en soutirant latéralement au moins une fraction des effluents réactionnels. Le catalyseur utilisé est un catalyseur commercial classique, de type zéolithique.

Pour le premier essai, le conduit 13 d'acheminement vers le bas du flux enrichi en particules résultant de l'étape de soutirage débouche directement dans l'enceinte 10, à 1 m au-dessus du niveau du lit fluidisé de strippage 18.

Pour le deuxième essai, l'unité est modifiée conformément à l'invention : au pied du conduit 13, entre le séparateur balistique 11 et le lit fluidisé de strippage 18, on intercale un réceptacle 14, positionné de manière à ce que le conduit 13 plonge dans celui-ci. Ce réceptacle est conformé à celui représenté sur la figure 3 et il est dimensionné et positionné de manière à ce que la hauteur de débordement H soit égale à 50 cm. Il est alimenté en gaz de fluidisation, constitué de vapeur d'eau, avec un débit D1 régulé de manière à y établir un régime de lit fluidisé de particules de catalyseur, de densité égale à 450 kg.m$^{-3}$. A partir de ce réceptacle, les particules s'écoulent essentiellement par débordement vers le lit de strippage 18 situé au-dessous.

Le troisième essai est réalisé dans les mêmes conditions que le deuxième essai, avec un hauteur de débordement H égale à 1 m.

Le Tableau qui suit rassemble un certain nombre de conditions opératoires et résume les résultats des trois essais en termes de qualité de la séparation effluents réactionnels/grains de catalyseurs et de rendement du procédé.

**TABLEAU**

|  | Essai n° 1 | Essai n°2 | Essai n°3 |
|---|---|---|---|
| **Conditions opératoires:** |  |  |  |
| Température du réacteur (°C) | 530 | 535 | 537 |
| Température du régénérateur (°C) | 750 | 738 | 733 |

Suite de tableau

| | Essai n°1 | Essai n°2 | Essai n°3 |
|---|---|---|---|
| **Conditions opératoires:** | | | |
| Rapport catalyseur/charge (C/O) | 5,7 | 6,2 | 6,5 |
| Delta Coke | 0,93 | 0,85 | 0,82 |
| **Taux d'effluents gazeux entraînés :** | 30 % | 15 % | 5 % |
| **Rendements :**<br>Conversion (% en poids) | 71,4 | 73,3 | 74,0 |
| Rendement en gaz secs (% en poids) | 4,2 | 3,7 | 3,4 |
| Rendement en GPL (% en poids) | 16,4 | 17,8 | 18,5 |
| Rendement en essence (% en poids) | 45,1 | 46,0 | 46,4 |
| Rendement en distillat (% en poids) | 18,1 | 17,5 | 17,2 |
| Rendement en slurry (% en poids) | 10,4 | 9,2 | 8,8 |
| Rendement en coke (% en poids) | 5,3 | 5,3 | 5,3 |

Le terme "taux d'effluents gazeux entraînés" désigne ici le pourcentage de fluides gazeux entraînés dans le conduit 13, avec le flux résultant enrichi de particules, par rapport à la quantité initiale de fluides gazeux à séparer des particules de catalyseur.

La conversion est calculée, de manière connue en soi, par la formule :

$$\texttt{Conversion = 100 - (\% distillat + \% slurry).}$$

Dans le tableau ci-dessus, les produits obtenus sont définis comme suit :

- gaz secs : hydrocarbures légers à 1 ou 2 atomes de carbone et hydrogène sulfuré ($H_2S$);
- GPL : hydrocarbures légers à 3 ou 4 atomes de carbone ;
- essence : coupe d'hydrocarbures dont l'intervalle d'ébullition s'étend de 20°C jusque vers 200°C ;
- distillat: coupe d'hydrocarbures dont l'intervalle d'ébullition s'étend de 200°C jusque vers 360°C ;
- slurry : résidu de distillation, qui contient des quantités importantes de poussières de catalyseur et dont l'intervalle d'ébullition s'étend généralement au delà de 500°C.

Les résultats de ces trois essais confirment l'intérêt du dispositif et du procédé de l'invention.

Dans les essais 2 et 3 conformes à l'invention, le taux d'effluents gazeux entraînés est remarquablement diminué : il est divisé par deux dans l'essai 2, et par six dans l'essai 3, par rapport à l'essai 1 qui représente l'art antérieur. La qualité de la séparation rapide effectuée en sortie de réacteur, entre les effluents gazeux et les particules de catalyseur, est donc remarquablement améliorée. Le procédé et le dispositif selon l'invention permettent ainsi de concilier rapidité et qualité dans les séparations de fluides gazeux et de particules solides.

Les performances du procédé de craquage catalytique s'en trouvent sensiblement améliorées.

D'une part, l'efficacité accrue de la séparation entre les effluents gazeux et les particules de catalyseur permet de réduire les phénomènes de surcraquage, ce qui se traduit pas une diminution du taux de cokéfaction du catalyseur, illustré par le paramètre Delta Coke (ou masse de coke qui se dépose au cours du processus de craquage par unité de masse de catalyseur). Cette diminution du Delta Coke, observée pour les essais 2 et 3, permet d'abaisser la température du régénérateur, d'augmenter la vitesse de circulation du catalyseur (à savoir augmenter le rapport C/O) et d'augmenter la température du réacteur, ce qui permet d'accroître la sévérité du craquage. S'instaurent ainsi des conditions plus favorables à un craquage plus poussé et plus sélectif de la charge.

D'autre part, l'invention permet effectivement d'accroître la sélectivité des réactions de craquage : pour les essais 2 et 3, on constate une nette diminution des rendements en gaz secs et en slurry, qui sont des produits indésirables, car difficilement valorisables. Cette diminution se fait au profit des produits intermédiaires recherchés, tels que essences, GPL.

Ces performances accrues se traduisent par un gain notable en matière de conversion. L'ajout, au pied du conduit 13, d'un réceptacle muni d'un système de fluidisation des particules de catalyseur permet en effet de gagner 1,9 point de conversion, comme le montre l'essai 2. Dans l'essai 3, une optimisation du positionnement du réceptacle apporte un gain de conversion supplémentaire de 0,7 point.

Ces progrès indéniables peuvent être mis à profit pour craquer des charges plus lourdes, par exemple comprenant une teneur accrue en résidus.

Le dispositif et le procédé selon l'invention permettent donc d'améliorer très nettement les performances des unités de craquage catalytique, ce qui est d'autant plus appréciable lorsque l'on souhaite traiter des charges lourdes, particulièrement réfractaires au craquage.

## Revendications

1. Dispositif de séparation de particules solides et de fluides gazeux comportant un moyen (11) de soutirage rapide pour l'évacuation d'au moins une fraction des fluides gazeux, et au moins un conduit (13) permettant de diriger de haut en bas le flux résultant enrichi en particules, vers une zone de strippage en lit fluidisé (18) **caractérisé en ce qu'**est intercalé, entre le moyen (11) de soutirage rapide et la zone de strippage (18), un réceptacle (14) ouvert dans sa partie supérieure, dans lequel débouche le conduit (13), et **en ce que** ce réceptacle (14) comprend à sa base au moins un diffuseur (15) alimenté en gaz de fluidisation et grâce auquel les particules solides sont mises en régime de lit fluidisé dense (17), d'une densité comprise entre 300 et 800 kg.m$^{-3}$, puis s'écoulent par débordement du réceptacle (14) vers ladite zone de strippage (18) située au-dessous.

2. Dispositif selon la revendication 1, **caractérisé en ce que** le diffuseur (15) est alimenté en gaz de fluidisation par une ligne (16) munie d'un moyen de régulation du débit D1 du gaz, qui permet d'ajuster ce débit D1 de manière à maintenir la vitesse superficielle de ce gaz dans le lit fluidisé dense de particules (17) à une valeur comprise entre 0,1 et 40 cm.s$^{-1}$ inclus et, de préférence, comprise entre 0,1 et 20 cm.s$^{-1}$ inclus.

3. Dispositif selon l'une quelconque des revendications précédentes, **caractérisé en ce que** le réceptacle (14) est positionné de manière à ce que le conduit (13) d'acheminement vers le bas du flux résultant enrichi en particules débouche dans le lit fluidisé dense de particules (17) contenu dans ce réceptacle avec une hauteur de débordement H comprise entre 50cm et 2m inclus, de préférence entre 50cm et 1m inclus.

4. Dispositif selon l'une quelconque des revendications précédentes, **caractérisé en ce que** le réceptacle (14) est positionné de manière à ce que la surface latérale à la sortie du conduit (13) d'acheminement vers le bas du flux résultant enrichi en particules soit comprise entre 0,7 et 1,5 fois la section de ce conduit (13).

5. Dispositif selon l'une quelconque des revendications précédentes, **caractérisé en ce que** les dimensions du réceptacle (14) sont telles que le lit fluidisé dense qu'il contient est de taille très inférieure à celle du lit fluidisé de strippage (18), la section dudit réceptacle (14) étant de préférence comprise entre 1,5 et 6 fois celle du (des) conduit (s) (13) qui y plonge(nt).

6. Dispositif selon l'une quelconque des revendications précédentes, **caractérisé en ce que** le diffuseur (15) comprend un moyen permettant de libérer, de manière homogène et finement divisée, le gaz de fluidisation à la base du lit de particules (17) que contient le réceptacle (14), notamment un agencement de un ou plusieurs tubes, éventuellement disposés en faisceau, et régulièrement pourvus de fentes ou d'orifices.

7. Dispositif selon l'une quelconque des revendications précédentes, **caractérisé en ce que** le diffuseur (15') est constitué d'un tube annulaire, disposé à plat dans la partie inférieure du réceptacle et pourvu de fentes ou d'orifices dans sa moitié supérieure.

8. Dispositif selon l'une quelconque des revendications précédentes, **caractérisé en ce que** le diffuseur (15") est constitué d'une chambre occupant la partie inférieure du réceptacle (14) et dont la paroi supérieure, sur laquelle repose ledit lit fluidisé dense de particules (17), est régulièrement percée d'orifices de petite taille, par lesquels le gaz de fluidisation est distribué sur toute la surface inférieure du lit (17).

9. Dispositif selon l'une quelconque des revendications précédentes, **caractérisé en ce que** le moyen de soutirage rapide (11) permet d'éliminer du mélange de fluides gazeux et de particules solides au moins une fraction desdits fluides en un intervalle de temps aussi court que possible, inférieur à 1 seconde, de préférence inférieur à 0,5 seconde, encore plus préférentiellement inférieur à 0,2 seconde.

**10.** Dispositif selon l'une quelconque des revendications précédentes, **caractérisé en ce que** le moyen de soutirage est constitué d'un système de séparation balistique à axe d'enroulement horizontal, qui imprime au mélange à séparer une rotation d'un angle compris entre 30 et 190 degrés autour de cet axe, tout en soutirant latéralement au moins une fraction des fluides gazeux.

**11.** Dispositif selon l'une quelconque des revendications précédentes, **caractérisé en ce que** le réceptacle (14) est muni à sa base d'un ou plusieurs orifice(s) ou drains (32), de section totale comprise entre 3% et 20% de la section du réceptacle (14).

**12.** Dispositif selon l'une quelconque des revendications précédentes, **caractérisé en ce que** le bord supérieur de la (des) paroi (s) latérale (s) du réceptacle (14) est (sont) découpée(s) en dents de scie.

**13.** Dispositif selon l'une quelconque des revendications précédentes, dans lequel le moyen de soutirage (11) divise le mélange de fluides gazeux et de particules solides, et ledit flux résultant enrichi en particules est acheminé vers le bas par au moins deux conduits (13a, 13b) sensiblement parallèles, **caractérisé en ce que** ces conduits débouchent chacun à l'intérieur d'un réceptacle indépendant (14a, 14b) contenant un lit fluidisé de particules de densité appropriée.

**14.** Dispositif selon l'une quelconque des revendications 1 à 12, dans lequel le moyen de soutirage (11) divise le mélange de fluides gazeux et de particules solides, et ledit flux résultant enrichi en particules est acheminé vers le bas par au moins deux conduits (13a, 13b) sensiblement parallèles, **caractérisé en ce que** au moins deux de ces conduits débouchent dans un réceptacle commun, contenant un seul et même lit fluidisé dense de particules.

**15.** Procédé de séparation de particules solides et de fluides gazeux, dans lequel on effectue une étape de soutirage rapide d'une durée inférieure à une seconde, qui permet d'évacuer au moins une fraction desdits fluides gazeux, puis l'on dirige vers le bas, à l'aide d'au moins un conduit, le flux résultant enrichi en particules, vers une zone de strippage en lit fluidisé **caractérisé en ce que** l'on introduit ledit flux résultant directement à l'intérieur d'un lit fluidisé dense de particules de densité comprise entre 300 et 800 kg.m$^{-3}$, disposé au dessus de ladite zone de strippage, et entièrement contenu dans au moins un réceptacle hors duquel les particules s'écoulent par débordement vers ladite zone de strippage située au dessous.

**16.** Procédé selon la revendication précédente, **caractérisé en ce que** le lit de particules contenu dans le réceptacle est maintenu à l'état fluidisé par introduction, dans sa partie inférieure, d'au moins un gaz de fluidisation, avec un débit D1 tel que la densité de ce lit soit comprise entre 600 et 700 kg.m$^{-3}$.

**17.** Procédé selon l'une quelconque des revendications 15 et 16, **caractérisé en ce que** le débit D1 du gaz de fluidisation introduit dans le réceptacle est régulé de manière à maintenir la vitesse superficielle de ce gaz dans le lit fluidisé dense contenu dans le réceptacle à une valeur comprise entre 0,1 et 40 cm.s$^{-1}$ inclus et, de préférence, entre 0,1 et 20 cm.s$^{-1}$ inclus.

**18.** Procédé selon l'une quelconque des revendications 15 à 17, **caractérisé en ce que** le gaz de fluidisation est choisi de manière à réaliser un prétraitement des particules tel qu'un préstrippage, un conditionnement, une passivation, en amont du traitement qui sera pratiqué dans la zone de strippage située au-dessous.

**19.** Procédé selon l'une quelconque des revendications 15 à 18, **caractérisé en ce que** le gaz de fluidisation contient de la vapeur d'eau, seule ou en mélange avec d'autres gaz.

**20.** Procédé selon l'une quelconque des revendications 15 à 19, **caractérisé en ce que** la température du lit fluidisé dense contenu dans le réceptacle est supérieure à celle du lit de strippage situé au-dessous

**21.** Utilisation du dispositif selon l'une des revendications 1 à 14 ou du procédé selon l'une des revendications 15 à 20 dans un procédé industriel nécessitant une étape de séparation rapide de fluides gazeux et de particules solides, notamment dans des procédés du type des craquages thermiques ou des craquages catalytiques en lit fluidisé.

**22.** Utilisation selon la revendication 21 dans un procédé de craquage catalytique en lit fluidisé, au niveau de l'étape de séparation effectuée en sortie du réacteur, entre les effluents réactionnels et les particules de catalyseur désactivées, que le réacteur soit de type "riser"ou"downer".

**Patentansprüche**

1. Vorrichtung zum Trennen von Feststoffteilchen und gasförmigen Strömungsmitteln, umfassend eine Schnell-Entnahmevorrichtung (11) zur Abfuhr wenigstens eines Teils bzw. einer Fraktion der gasförmigen Strömungsmittel, sowie wenigstens eine Leitung (13), mittels welcher der resultierende, mit Teilchen angereicherte Fluss in Richtung von oben nach unten in eine Absteif- bzw. Strippenzone mit Fließ- bzw. Wirbelstrombett (18) gelenkt werden kann, **dadurch gekennzeichnet, dass** zwischen die Schnellentnahmevorrichtung (11) und die Abstreif- bzw. Scnppingzone (18) ein in seinem Oberteil offener Behälter (14) zwischengeschaltet ist, in welchem die Leitung (13) mündet, und dass dieser Behälter (14) in seinem Unterteil bzw. Basis wenigstens einen mit einem Fluidisierungsgas gespeicherten Diffusor (15) aufweist, mit Hilfe dessen die Feststoffteilchen in einen dichten Wirbel- bzw. Fließbettzustand einer Dichte im Bereich zwischen 300 und 800 kg.m$^{-3}$ versetzt werden und sodann durch Überlaufen aus dem Behälter (14) in die darunter befindliche Abstreif- bzw. Strippingzone (18) fließen.

2. Vorrichtung nach Anspruch 1, **dadurch gekennzeichnet, dass** der Diffusor (15) mit dem Fluidisierungsgas über eine mit einem Mittel zum Regeln des Gasdurchsatzes D1 versehene Leitung (16) gespeist wird, mittels welchem dieser Durchsatz D1 so eingestellt werden kann, dass die Oberflächengeschwindigkeit dieses Gases in dem dichten Wirbel- bzw. Fließbett von Teilchen (17) auf einem Wert im Bereich zwischen 0,1 und 40 cm.s$^{-1}$ einschließlich, und vorzugsweise zwischen 0,1 und 20 cm.s$^{-1}$ einschließlich, gehalten wird.

3. Vorrichtung nach einem der vorhergehenden Ansprüche, **dadurch gekennzeichnet, dass** der Behälter (14) so positioniert ist, dass die nach unten führende Zuflussleitung (13) für den mit den Teilchen angereicherten resultierenden Fluss in dem in diesem Behälter enthaltenen dichten Wirbel- bzw. Fließbett (17) von Teilchen mit einer Überlaufhöhe H im Bereich zwischen 50 cm und 2 m einschließlich, und vorzugsweise zwischen 50 cm und 1 m einschließlich, mündet.

4. Vorrichtung nach einem der vorhergehenden Ansprüche, **dadurch gekennzeichnet, dass** der Behälter (14) so positioniert ist, dass die Fläche seitlich-lateral vom Austritt der abwärts führenden Zufuhrleitung (13) für den resultierenden, mit Teilchen angereicherten Fluß im Bereich zwischen dem 0,7- und dem 1,5-fachen des Querschnitts dieser Leitung (13) beträgt.

5. Vorrichtung nach einem der vorhergehenden Ansprüche, **dadurch gekennzeichnet, dass** die Abmessungen des Behälters (14) so gewählt sind, dass das in ihm enthaltene dichte Wirbelstrom- bzw. Fließbett eine sehr viel kleinere Größe als das Abstreif- bzw. Stripping- Fließ- bzw. Wirbelbett (18) besitzt, wobei der Querschnitt des genannten Behälters (14) vorzugsweise im Bereich zwischen dem 1,5-fachen und dem 6-fachen des Querschnitts der in den Behälter eintauchenden Leitung(en) (13) beträgt.

6. Vorrichtung nach einem der vorhergehenden Ansprüche, **dadurch gekennzeichnet, dass** der Diffusor (15) ein Mittel zur Freisetzung des Fluidisierungsgases in homogener und fein verteilter Form an der Basis des in dem Behälter enthaltenen Teilchenbetts (17) aufweist, insbesondere eine Anordnung von ein oder mehreren, eventuell bündel-bzw. büschelförmig angeordneten und regelmäßig mit Schlitzen bzw. Öffnungen versehenen Rohren.

7. Vorrichtung nach einem der vorhergehenden Ansprüche, **dadurch gekennzeichnet, dass** der Diffusor (15') aus einem im unteren Teil des Behälters flach-eben angeordneten und mit Schlitzen oder Öffnungen in seiner oberen Hälfte versehenen Ringrohr besteht.

8. Vorrichtung nach einem der vorhergehenden Ansprüche, **dadurch gekennzeichnet, dass** der Diffusor (15") aus einer den unteren Teil des Behälters (14) einnehmenden Kammer besteht, deren obere Wandung, auf welcher das genannte dichte Wirbelstrom- bzw. Fließbett (17) von Teilchen aufruht, regelmäßig mit Öffnungen kleiner Abmessung durchsetzt ist, durch welche das Fluidisierungsgas über die gesamte untere Fläche des Wirbel- bzw. Fließbetts (17) verteilt wird.

9. Vorrichtung nach einem der vorhergehenden Ansprüche, **dadurch gekennzeichnet, dass** durch die Schnell-Entnahmevorrichtung (11) aus dem Gemisch von gasförigen Strömungsmitteln und Feststoffteilchen wenigstens ein Teil bzw. eine Fraktion der genannten Strömungsmittel in einer möglichst kurzen Zeitdauer von weniger als 1 Sekunde, vorzugsweise von weniger als 0,5 Sekunden, und besonders bevorzugt von weniger als 0,2 Sekunden, eliminiert werden kann.

10. Vorrichtung nach einem der vorhergehenden Ansprüche, **dadurch gekennzeichnet, dass** die Entnahmevorrichtung aus einem System zur ballistischen Trennung mit horizontaler Drehachse besteht, das dem zu trennenden Gemisch eine Drehung um einen Winkel im Bereich zwischen 30 und 190 Grad um diese Achse erteilt, bei gleichzeitiger lateraler Abfuhr wenigstens eines Teils der gasförmigen Strömungsmittel.

11. Vorrichtung nach einem der vorhergehenden Ansprüche, **dadurch gekennzeichnet, dass** der Behälter (14) an seiner Basis mit einer oder mehreren öffnung(en) oder Drainleitung(en) (32) versehen ist, deren Gesamtquerschnitt im Bereich zwischen 3% und 20% des Querschnitts des Behälters (14) beträgt.

12. Vorrichtung nach einem der vorhergehenden Ansprüche, **dadurch gekennzeichnet, dass** der obere Rand der Seitenwandung(en) des Behälters (14) sägezahnförmig geschnitten ist.

13. Vorrichtung nach einem der vorhergehenden Ansprüche, bei welcher die Entnahmevorrichtung (11) das Gemisch aus gasförmigen Strömungsmitteln und Feststoffteilchen aufteilt und der genannte resultierende, mit Teilchen angereicherte Fluss durch wenigstens zwei im Wesentlichen parallele Leitungen (13a, 13b) abwärts geleitet wird, **dadurch gekennzeichnet, dass** diese Leitungen jede jeweils in einem unabhängigen, ein Wirbel- bzw. Fließbett von Teilchen geeigneter Dichte enthaltenden Behälter (14a, 14b) münden.

14. Vorrichtung nach einem der Ansprüche 1 bis 12, bei welcher die Entnahmevorrichtung (11) das Gemisch aus gasförmigen Strömungsmitteln und Feststoffteilchen aufteilt und der genannte resultierende, mit Teilchen angereicherte Fluss durch wenigstens zwei im Wesentlichen parallele Leitungen (13a, 13b) abwärts geleitet wird, **dadurch gekennzeichnet, dass** die wenigstens zwei dieser Leitungen in einem gemeinsamen Behälter münden, der ein einziges und gleiches dichtes Wirbel- bzw. Fließbett von Teilchen enthält.

15. Verfahren zum Trennen von Feststoffteilchen und gasförmigen Strömungsmitteln, bei welchem man eine Schnell-Entnahme-Verfahrensstufe mit einer Dauer von weniger als einer Sekunde vornimmt, welche die Entnahme wenigstens eines Teils bzw. einer Fraktion der genannten gasförmigen Strömungsmittel gestattet, und sodann den erhaltenen, mit Teilchen angereicherten Fluss mit Hilfe wenigstens einer Leitung abwärts zu einer Abstreif- bzw. Strippingzone in einem Wirbelstrom- bzw. Fließbett lenkt, **dadurch gekennzeichnet, dass** man den genannten resultierenden Fluss direkt in das Innere eines dichten Wirbel- bzw. Fließbetts von Teilchen mit einer Dichte im Bereich zwischen 300 und 800 kg.m$^{-3}$ einleitet, das über der genannten Abstreif- bzw. Strippingzone angeordnet und vollständig in wenigstens einem Behälter enthalten ist, aus welchem die Teilchen durch Überlaufen zu der genannten darunter angeordneten Abstreif- bzw. Strippingzone strömen.

16. Verfahren nach dem vorhergehenden Anspruch, **dadurch gekennzeichnet, dass** das in dem Behälter enthaltene Teilchenbett in dem fluidisierten Zustand gehalten wird, indem man in seinen unteren Teil wenigstens ein Fluidisierungsgas mit einem solchen Durchsatz D1 einleitet, dass die Dichte dieses Betts einen Wert im Bereich zwischen 600 und 700 kg.m$^{-3}$ besitzt.

17. Verfahren nach einem der Ansprüche 15 und 16, **dadurch gekennzeichnet, dass** der Durchsatz D1 des in den Behälter eingeleiteten Fluidisierungsgases so geregelt wird, dass die Oberflächengeschwindigkeit des Gases in dem in dem Behälter enthaltenen dichten Wirbelstrom- bzw. Fließbett auf einem Wert im Bereich zwischen 0,1 und 40 cm.s$^{-1}$ einschließlich, und vorzugsweise zwischen 0,1 und 20 cm.s$^{-1}$ einschließlich, gehalten wird.

18. Verfahren nach einem der Ansprüche 15 bis 17, **dadurch gekennzeichnet, dass** das Fluidisierungsgas ausgewählt wird im Hinblick auf die Durchführung einer Vorbehandlung der Teilchen wie beispielsweise eines Vorstripping, einer Konditionierung, einer Passivierung, stromaufwärts der dann in der darunter gelegenen Abstreif- bzw. Strippingzone ausgeführten Behandlung.

19. Verfahren nach einem der Ansprüche 15 bis 18, **dadurch gekennzeichnet, dass** das Fluidisierungsgas Wasserdampf enthält, allein oder in Mischung mit anderen Gasen.

20. Verfahren nach einem der Ansprüche 15 bis 19, **dadurch gekennzeichnet, dass** die Temperatur des in dem Behälter enthaltenen dichten Fließbetts höher als die Temperatur des darunter gelegenen Abstreif- bzw. Strippingbetts ist.

21. Anwendung der Vorrichtung nach einem der Ansprüche 1 bis 14, oder des Verfahrens nach einem der Ansprüche 15 bis 20 in einem industriellen Verfahren, das eine schnelle Trennung von gasförmigen Strömungsmitteln und Feststoffteilchen erfordert, insbesondere in Verfahren vom Typ der thermischen oder katalytischen Krackung im Fließbett.

**22.** Anwendung nach Anspruch 21 in einem katalytischen Krack-Verfahren im Fließbett, auf der Ebene der Verfahrensstufe der am Ausgang des Reaktors vorgenommenen Trennung zwischen den Reaktionsaustrittsprodukten und den deaktivierten Katalysatorteilchen, unabhängig ob der Reaktor vom 'Riser'- oder vom 'Downer'-Typ ist.

## Claims

**1.** A device for separating solid particles and gaseous fluids, comprising a rapid draw-off means (11) for evacuation of at least a fraction of the gaseous fluids, and at least one duct (13) allowing the resultant, particle-enriched flow to be directed from top to bottom, towards a fluidised bed stripping zone (18), **characterised in that** there is interposed, between the rapid draw-off means (11) and the stripping zone (18), a receptacle (14) open at the top, into which leads the duct (13), and **in that** said receptacle (14) comprises at its base at least one diffuser (15) supplied with fluidising gas and by means of which the solid particles are brought on stream into a dense fluidised bed (17), of a density of between 300 and 800 $kg \cdot m^{-3}$, and then flow out by overflowing out of the receptacle (14) towards said stripping zone (18) situated therebelow.

**2.** A device according to claim 1, **characterised in that** the diffuser (15) is supplied with fluidising gas by a line (16) provided with a means for regulating the gas flow rate D1, which makes it possible to adjust said flow rate D1 in such a way as to maintain the surface velocity of said gas in the dense fluidised bed of particles (17) at a value of between 0.1 and 40 $cm \cdot s^{-1}$ inclusive and, preferably of between 0.1 and 20 $cm \cdot s^{-1}$ inclusive.

**3.** A device according to either one of the preceding claims, **characterised in that** the receptacle (14) is positioned in such a way that the duct (13) for transporting downwards the resultant particle-enriched flow of particles opens into the dense fluidised bed of particles (17) contained in said receptacle with an overflow height H of between 50 cm and 2 m inclusive, preferably between 50 cm and 1 m inclusive.

**4.** A device according to any one of the preceding claims, **characterised in that** the receptacle (14) is positioned in such a way that the lateral surface area at the outlet of the duct (13) for downward transportation of the resultant particle-enriched flow is between 0.7 and 1.5 times the section of said duct (13).

**5.** A device according to any one of the preceding claims, **characterised in that** the dimensions of the receptacle (14) are such that the dense fluidised bed which it contains is much smaller in size than the fluidised stripping bed (18), the section of said receptacle (14) preferably being between 1.5 and 6 times that of the duct(s) (13) which is(are) immersed therein.

**6.** A device according to any one of the preceding claims, **characterised in that** the diffuser (15) comprises a means allowing the release, in a homogeneous and finely divided manner, of the fluidising gas at the base of the bed of particles (17) contained by the receptacle (14), in particular an arrangement of one or more tubes, optionally disposed in a bundle and regularly provided with slots or orifices.

**7.** A device according to any one of the preceding claims, **characterised in that** the diffuser (15') consists of an annular tube, disposed flat in the lower part of the receptacle and provided with slots and orifices in its upper half.

**8.** A device according to any one of the preceding claims, **characterised in that** the diffuser (15") consists of a chamber occupying the lower part of the receptacle (14) and whose upper wall, on which rests said dense fluidised bed of particles (17), is regularly perforated with small orifices, through which the fluidising gas is distributed over the entire lower surface of the bed (17).

**9.** A device according to any one of the preceding claims, **characterised in that** the rapid draw-off means (11) makes it possible to remove from the mixture of gaseous fluids and solid particles at least a fraction of said fluids in the shortest possible period of time, of less than 1 second, preferably less than 0.5 seconds, even more preferably less than 0.2 seconds.

**10.** A device according to any one of the preceding claims, **characterised in that** the draw-off means consists of a ballistic separation system with a horizontal winding axis, which imparts to the mixture to be separated rotation at an angle of between 30 and 190 degrees around said axis, while drawing off laterally at least a fraction of the gaseous fluids.

11. A device according to any of the preceding claims, **characterised in that** the receptacle (14) is provided at its base with one or more orifice(s) or drains (32), of a total section of between 3% and 20% of the section of the receptacle (14).

12. A device according to any one of the preceding claims, **characterised in that** the upper edge of the lateral wall(s) of the receptacle (14) is(are) cut into saw teeth.

13. A device according to any one of the preceding claims, in which the draw-off means (11) divides the mixture of gaseous fluids and solid particles and said resultant particle-enriched flow is transported downwards by at least two substantially parallel ducts (13a, 13b), **characterised in that** said ducts each open inside an independent receptacle (14a, 14b) containing a fluidised particle bed of appropriate density.

14. A device according to any one of claims 1 to 12, in which the draw-off means (11) divides the mixture of gaseous fluids and solid particles, and said resultant particle-enriched flow is transported downwards by at least two substantially parallel ducts (13a, 13b), **characterised in that** at least two of said ducts open into a common receptacle containing one and the same dense fluidised bed of particles.

15. A process of separating solid particles and gaseous fluids, in which a rapid draw-off stage of a duration of less than one second is performed, which allows evacuation of at least a fraction of said gaseous fluids, the resultant particle-enriched flow then being directed downwards, by means of at least one duct, towards a fluidised bed stripping zone, **characterised in that** said resultant flow is introduced directly into the interior of a dense fluidised particle bed of a density of between 300 and 800 kg.m$^{-3}$, disposed above said stripping zone, and entirely contained in at least one receptacle, out of which the particles flow by overflowing towards said stripping zone situated therebelow.

16. A process according to the preceding claim, **characterised in that** the bed of particles contained in the receptacle is kept in the fluidised state by the introduction, into its lower part, of at least one fluidising gas, at a flow rate D1 such that the density of said bed is between 600 and 700 kg·m$^{-3}$.

17. A process according to either one of claims 15 and 16, **characterised in that** the flow rate D1 of the fluidising gas introduced into the receptacle is regulated in such a way as to maintain the surface velocity of said gas in the dense fluidised bed contained in the receptacle at a value of between 0.1 and 40 cm·s$^{-1}$ inclusive and preferably of between 0.1 and 20 cm·s$^{-1}$ inclusive.

18. A process according to any one of claims 15 to 17, **characterised in that** the fluidising gas is selected in such a way as to perform pretreatment of the particles, such as prestripping, conditioning, passivation, upstream of the treatment which is performed in the stripping zone situated therebelow.

19. A process according to any one of claims 15 to 18, **characterised in that** the fluidising gas contains steam, on its own or in a mixture with other gases.

20. A process according to any one of claims 15 to 19, **characterised in that** the temperature of the dense fluidised bed contained in the receptacle is greater than that of the stripping bed situated therebelow.

21. Use of the device according to any one of claims 1 to 14 or of the process according to any one of claims 15 to 20 in an industrial process requiring a stage of rapid separation of gaseous fluids and solid particles, in particular in processes of the type involving thermal cracking or catalytic cracking using a fluidised bed.

22. Use according to claim 21 in a catalytic cracking process using a fluidised bed, at the level of the separation stage performed on discharge from the reactor, between the reaction effluents and the deactivated catalyst particles, whether the reactor is of the "riser" or the "downer" type.

FIG.1

FIG.2

FIG.3

FIG.4